# FASCICULE DE BREVET EUROPEEN

(11) **EP 3 201 150 B1**
(45) Date de publication et mention de la délivrance du brevet: **24.06.2020**
(21) Numéro de dépôt: 15781126.6
(22) Date de dépôt: 29.09.2015
(51) Int. Cl.: B32B 17/06, C03C 17/36

(54) **SUBSTRAT MUNI D'UN EMPILEMENT A PROPRIETES THERMIQUES ET A COUCHE INTERMEDIAIRE SOUS STOECHIOMETRIQUE**
SUBSTRAT MIT EINER MEHRFACHSCHICHT MIT THERMISCHEN EIGENSCHAFTEN UND EINER SUBSTÖCHIOMETRISCHEN ZWISCHENSCHICHT
SUBSTRATE PROVIDED WITH A MULTILAYER HAVING THERMAL PROPERTIES AND A SUBSTOICHIOMETRIC INTERMEDIATE LAYER

(30) Priorité: 30.09.2014 FR 1459256
(43) Date de publication de la demande: 09.08.2017
(73) Titulaire: SAINT-GOBAIN GLASS FRANCE, 92400 Courbevoie (FR)
(72) Inventeur: MERCADIER, Nicolas, 75014 Paris (FR)
(74) Mandataire: Saint-Gobain Recherche
(86) Numéro de dépôt international: PCT/FR2015/052589
(87) Numéro de publication internationale: WO 2016/051068

(56) Documents cités:
- WO-A1-2007/101964
- WO-A1-2010/103224
- WO-A1-2014/044984
- WO-A1-2014/080141
- WO-A2-2009/122090

## Description

L'invention concerne un vitrage multiple comportant au moins deux substrats, du type substrats verriers, qui sont maintenus ensemble par une structure de châssis, ledit vitrage réalisant une séparation entre un espace extérieur et un espace intérieur, dans lequel au moins une lame de gaz intercalaire est disposée entre les deux substrats.

D'une manière connue, un des substrat peut être revêtu sur une face intérieure en contact avec la lame de gaz intercalaire d'un empilement de couches minces à propriétés de réflexion dans l'infrarouge et/ou dans le rayonnement solaire comportant une seule couche fonctionnelle métallique, en particulier à base d'argent ou d'alliage métallique contenant de l'argent et deux revêtements antireflet, lesdits revêtements comportant chacun au moins une couche diélectrique, ladite couche fonctionnelle étant disposée entre les deux revêtements antireflet.

L'invention concerne plus particulièrement l'utilisation de tels substrats pour fabriquer des vitrages d'isolation thermique et/ou de protection solaire. Ces vitrages peuvent être destinés à équiper les bâtiments, en vue notamment de diminuer l'effort de climatisation et/ou d'empêcher une surchauffe excessive (vitrages dits « de contrôle solaire ») et/ou diminuer la quantité d'énergie dissipée vers l'extérieur (vitrages dits « bas émissifs ») entraînée par l'importance toujours croissante des surfaces vitrées dans les bâtiments.

Ces vitrages peuvent par ailleurs être intégrés dans des vitrages présentant des fonctionnalités particulières, comme par exemple des vitrages chauffants ou des vitrages électrochromes.

Un type d'empilement de couches connu pour conférer aux substrats de telles propriétés comporte une couche métallique fonctionnelle à propriétés de réflexion dans l'infrarouge et/ou dans le rayonnement solaire, notamment une couche fonctionnelle métallique à base d'argent ou d'alliage métallique contenant de l'argent.

Dans ce type d'empilement, la couche fonctionnelle se trouve ainsi disposée entre deux revêtements antireflet comportant chacun en général plusieurs couches qui sont chacune en un matériau diélectrique du type nitrure, et notamment nitrure de silicium ou d'aluminium, ou oxyde. Du point de vu optique, le but de ces revêtements qui encadrent la couche fonctionnelle métallique est « d'antirefléter » cette couche fonctionnelle métallique.

Un revêtement de blocage est toutefois intercalé parfois entre un ou chaque revêtement antireflet et la couche métallique fonctionnelle, le revêtement de blocage disposé sous la couche fonctionnelle en direction du substrat la protège lors d'un éventuel traitement thermique à haute température, du type bombage et/ou trempe et le revêtement de blocage disposé sur la couche fonctionnelle à l'opposé du substrat protège cette couche d'une éventuelle dégradation lors du dépôt du revêtement antireflet supérieur et lors d'un éventuel traitement thermique à haute température, du type bombage et/ou trempe.

L'invention concerne plus particulièrement l'utilisation d'une couche intermédiaire à l'intérieur de l'empilement et la mise en œuvre d'un traitement de l'empilement de couches minces complet à l'aide d'une source produisant un rayonnement et notamment un rayonnement infrarouge.

Il est connu, en particulier de la demande internationale de brevet N° WO 2010/142926 de prévoir une couche intermédiaire absorbante d'un empilement et d'appliquer un traitement après le dépôt d'un empilement pour diminuer l'émissivité, ou améliorer les propriétés optiques, d'empilements bas-émissifs. Le traitement permet d'améliorer la qualité de la couche fonctionnelle métallique et donc de diminuer l'émissivité (qui est directement liée à la résistance par carré) et l'utilisation d'une couche intermédiaire absorbante permet d'accroitre l'absorption de l'empilement pendant le traitement afin qu'il soit court mais efficace. Comme la couche intermédiaire absorbante lors du traitement devient transparente, les caractéristiques optiques de l'empilement après traitement sont intéressantes (une transmission lumineuse élevée peut notamment être obtenue).

Toutefois cette solution n'est pas complètement satisfaisante pour certaines applications car il est parfois nécessaire que la puissance du traitement soit élevée et/ou qu'il dure relativement longtemps (c'est-à-dire que la vitesse du substrat qui défile sous la source de rayonnement, généralement fixe, soit lente).

L'art antérieur connaît en outre de la demande internationale de brevet N° WO 2007/101964 un empilement de couches minces monocouche fonctionnelle dans lequel le revêtement antireflet sous-jacent à la couche fonctionnelle comprend une couche diélectrique de lissage non cristallisée en un oxyde mixte et de préférence en oxyde mixte de zinc et d'étain.

Comme cette couche est diélectrique, cela signifie qu'il est recherché que le matériau soit suffisamment oxydé pour ne pas être absorbant.

Le but de l'invention est de parvenir à remédier aux inconvénients de l'art antérieur, en mettant au point un nouveau type d'empilement de couches à une seule couche fonctionnelle, empilement qui présente, après traitement, une faible résistance par carré (et donc une faible émissivité), une transmission lumineuse élevée, et que le traitement puisse être réalisé à une puissance plus faible et/ou à une vitesse plus élevée.

L'invention a ainsi pour objet, dans son acception la plus large, un substrat revêtu sur une face d'un empilement de couches minces à propriétés de réflexion dans l'infrarouge et/ou dans le rayonnement solaire selon la revendication 1. Cet empilement comporte une seule couche fonctionnelle métallique, en particulier à base d'argent ou d'alliage métallique contenant de l'argent, et deux revêtements antireflet, lesdits revêtements comportant chacun au moins une couche diélectrique, ladite couche fonctionnelle étant disposée entre les deux revêtements antireflet.

Selon l'invention au moins un desdits revêtements antireflet comporte une couche intermédiaire comprenant de l'oxyde de zinc et d'étain SnₓZn_{y}O_{z} avec un rapport de 0,1 ≤ x/y ≤ 2,4, avec 0,75(2x + y) ≤ z ≤ 0,95(2x + y) et présente une épaisseur physique comprise entre 2 nm et 25 nm, voire entre 2 nm et 12 nm.

La couche intermédiaire comporte ainsi un oxyde mixte de zinc et d'étain sous-stœchiométrique et cet oxyde mixte est absorbant.

Au sens de l'invention, le fait que la couche intermédiaire comporte un oxyde de zinc et d'étain signifie que ces deux éléments représentent de 98 à 100 % en poids des éléments métalliques de la couche, c'est-à-dire 98 à 100 % en poids des éléments métalliques de la cible métallique si une cible métallique est utilisée pour déposer la couche intermédiaire ; il n'est pas exclu que la couche puisse comporter un ou plusieurs éléments métalliques, comme par exemple de l'aluminium et/ou de l'antimoine, comme dopant pour améliorer la conduction de la cible, ou comme impureté.

En effet, il a été découvert qu'une telle couche comprenant du SnₓZn_{y}O_{z} et sous-stœchiométrique nécessite un apport d'oxygène moindre qu'une couche métallique pour être pleinement oxydée et que l'élévation d'absorption qu'elle a induit avant le traitement disparait par le traitement. Cet oxygène lui est fourni lors du traitement, par une ou deux couches diélectriques adjacentes et/ou par l'oxygène présent dans l'atmosphère du traitement.

Ainsi, la puissance requise pour que le traitement provoque une élévation de température de la couche intermédiaire peut être divisée par un facteur de 1,5 à 3 ; alternativement ou cumulativement, la vitesse de traitement peut être augmentée d'un facteur de 1,2 à 2,5 pour accroître la productivité.

Après le traitement, l'empilement présente les propriétés d'un empilement ayant subi un traitement thermique à haute température de bombage, trempe ou recuit dont toutes les couches d'oxydes présentent leur stœchiométrie stable, mais le substrat ne présente pas l'état d'un substrat ayant subi un traitement thermique à haute température de bombage, trempe ou recuit.

Ladite couche intermédiaire selon l'invention n'est pas une couche terminale de l'empilement, c'est-à-dire n'est pas la couche de l'empilement qui est la plus éloignée de ladite face du substrat sur laquelle est situé l'empilement.

Par « revêtement » au sens de la présente invention, il faut comprendre qu'il peut y avoir une seule couche ou plusieurs couches de matériaux différents à l'intérieur du revêtement.

Comme habituellement, par « couche diélectrique » au sens de la présente invention, il faut comprendre que du point de vue de sa nature, le matériau de la couche est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Par « couche absorbante » au sens de la présente invention, il faut comprendre que la couche est un matériau présentant un coefficient k moyen, sur toute la plage de longueur d'onde du visible (de 380 nm à 780 nm), supérieur à 0,5 et présentant une résistivité électrique à l'état massif (telle que connue dans la littérature) supérieure à 10⁻⁶ Ω.cm.

Il est rappelé que n désigne l'indice de réfraction réel du matériau à une longueur d'onde donnée et le coefficient k représente la partie imaginaire de l'indice de réfraction à une longueur d'onde donnée ; le rapport n/k étant calculé à une longueur d'onde donnée identique pour n et pour k.

La couche intermédiaire selon l'invention est une couche absorbante au sens ci-dessus.

Les valeurs d'indice de réfraction indiquées dans le présent document sont les valeurs mesurées comme habituellement à la longueur d'onde de 550 nm.

Par « couche à base de ... » au sens de la présente invention, il faut comprendre que la couche comprend à plus de 50 % atomique le matériau mentionné.

Dans une version particulière de l'invention ladite couche intermédiaire comprend de l'oxyde de zinc et d'étain SnₓZn_{y}O_{z} avec un rapport de 0,55 ≤ x/y ≤ 0,83.

Dans une version particulière, ladite couche intermédiaire est constituée d'oxyde de zinc et d'étain SnₓZn_{y}O_{z} et ne comporte aucun autre élément.

Ladite couche intermédiaire est située, de préférence, dans ledit revêtement antireflet disposé en dessous de ladite couche fonctionnelle métallique, en direction du substrat, directement sur une couche diélectrique à base de nitrure et directement sous une couche de mouillage comprenant de l'oxyde de zinc, ladite couche diélectrique à base de nitrure présentant de préférence une épaisseur physique comprise entre 10 et 50 nm, et étant de préférence à base de nitrure de silicium Si₃N₄.

Alternativement ou cumulativement ladite couche intermédiaire peut être située dans le revêtement antireflet sus-jacent à la couche fonctionnelle, à l'opposé du substrat, de préférence directement sur un revêtement de sur-blocage situé directement sur ladite couche fonctionnelle.

L'épaisseur physique de ladite couche métallique fonctionnelle est de préférence comprise entre 6 nm et 16 nm, en incluant ces valeurs, et vise à atteindre une émissivité inférieure à 5 %.

Dans une autre version particulière de l'invention, la couche fonctionnelle est déposée directement sur un revêtement de sous-blocage disposé entre la couche fonctionnelle et le revêtement diélectrique sous-jacent à la couche fonctionnelle et/ou la couche fonctionnelle est déposée directement sous un revêtement de sur-blocage disposé entre la couche fonctionnelle et le revêtement diélectrique sus-jacent à la couche fonctionnelle et le revêtement de sous-blocage et/ou le revêtement de sur-blocage comprend une couche fine à base de nickel ou de titane présentant une épaisseur physique e' telle que 0,2 nm ≤ e' ≤ 2,5 nm.

Dans une autre version particulière de l'invention, la dernière couche du revêtement diélectrique sus-jacent, celle la plus éloignée du substrat, est à base d'oxyde, déposée de préférence sous stœchiométrique, et notamment est à base d'oxyde de titane (TiOₓ).

L'empilement peut ainsi comporter une dernière couche (« overcoat » en anglais), c'est-à-dire une couche de protection, déposée de préférence sous stœchiométrique. Cette couche se retrouve oxydée pour l'essentiel stœchiométriquement dans l'empilement après le dépôt.

L'invention concerne en outre un procédé d'obtention d'un substrat revêtu sur une face d'un empilement de couches minces à propriétés de réflexion dans l'infrarouge et/ou dans le rayonnement solaire selon l'invention comportant une seule couche fonctionnelle métallique, en particulier à base d'argent ou d'alliage métallique contenant de l'argent et deux revêtements antireflet, comprenant les étapes suivantes, dans l'ordre :
- le dépôt sur une face dudit substrat d'un empilement de couches minces à propriétés de réflexion dans l'infrarouge et/ou dans le rayonnement solaire selon l'invention comportant une seule couche fonctionnelle métallique, en particulier à base d'argent ou d'alliage métallique contenant de l'argent, et deux revêtements antireflet, puis
- le traitement dudit empilement de couches minces à l'aide d'une source produisant un rayonnement et notamment un rayonnement infrarouge dans une atmosphère comprenant de préférence de l'oxygène.

Il est possible en outre de prévoir l'utilisation d'une couche selon l'invention comprenant de l'oxyde de zinc et d'étain SnₓZn_{y}O_{z} avec un rapport de 0,1 ≤ x/y ≤ 2,4, avec 0,75(2x + y) ≤ z ≤ 0,95(2x + y) et présentant une épaisseur physique comprise entre 2 nm et 25 nm, voire entre 2 nm et 12 nm comme couche intermédiaire d'un empilement de couches minces à propriétés de réflexion dans l'infrarouge et/ou dans le rayonnement solaire selon l'invention comportant une seule couche fonctionnelle métallique, en particulier à base d'argent ou d'alliage métallique contenant de l'argent, et deux revêtements antireflet.

L'invention concerne en outre un vitrage multiple comportant au moins deux substrats qui sont maintenus ensemble par une structure de châssis, ledit vitrage réalisant une séparation entre un espace extérieur et un espace intérieur, dans lequel au moins une lame de gaz intercalaire est disposée entre les deux substrats, un substrat étant selon l'invention.

De préférence, un seul substrat du vitrage multiple comportant au moins deux substrats ou du vitrage multiple comportant au moins trois substrats est revêtu sur une face intérieure en contact avec la lame de gaz intercalaire d'un empilement de couches minces à propriétés de réflexion dans l'infrarouge et/ou dans le rayonnement solaire.

Le vitrage selon l'invention incorpore au moins le substrat porteur de l'empilement selon l'invention, éventuellement associé à au moins un autre substrat. Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre / lame de gaz intercalaire / feuille de verre. Le polymère peut notamment être à base de polyvinylbutyral PVB, éthylène vinylacétate EVA, polyéthylène téréphtalate PET, polychlorure de vinyle PVC.

Avantageusement, la présente invention permet ainsi de réaliser un empilement de couches minces monocouche fonctionnelle présentant, après traitement à l'aide d'une source produisant un rayonnement, déposé sur un substrat transparent, une transmission lumineuse dans le visible T_{L} élevée, supérieure à 80 % et une faible résistance par carré, inférieure à 4 ohms par carré, le traitement nécessitant moins de puissance et/ou étant pouvant être réalisé plus rapidement.

Avantageusement, le traitement à l'aide d'une source de rayonnement n'est pas un traitement thermique à haut température de tout l'ensemble constitué du substrat et de l'empilement ; le substrat n'est donc pas traité thermiquement par ce traitement à l'aide d'une source de rayonnement (pas de bombage, trempe ou recuit).

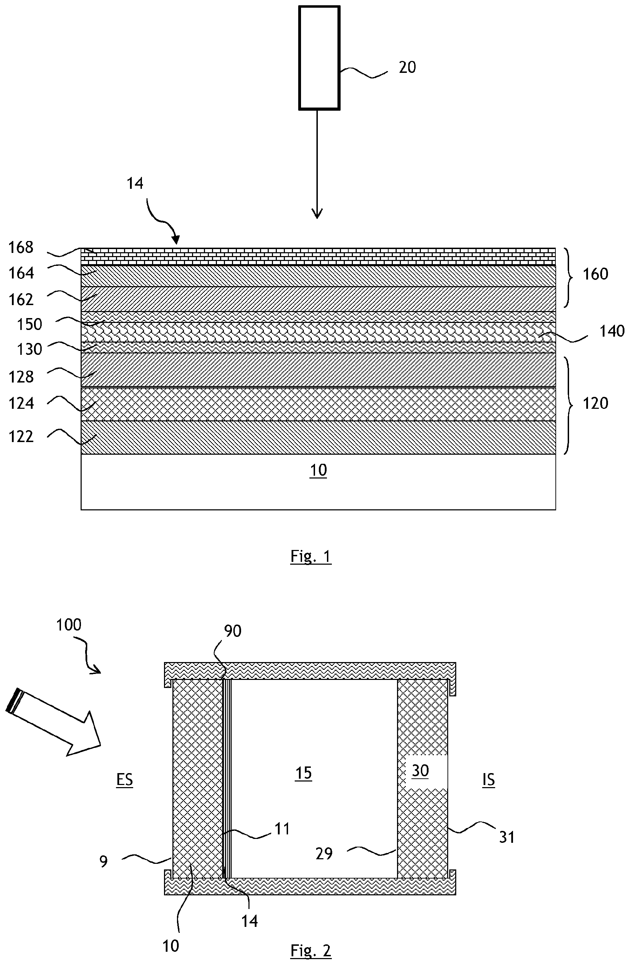

Les détails et caractéristiques avantageuses de l'invention ressortent des exemples non limitatifs suivants, illustrés à l'aide des figures ci-jointes illustrant :
- en figure 1, un empilement monocouche fonctionnelle selon l'invention, la couche fonctionnelle étant déposée directement sur un revêtement de sous-blocage et directement sous un revêtement de sur-blocage, l'empilement étant illustré pendant le traitement à l'aide d'une source produisant un rayonnement ; et
- en figure 2, une solution de double vitrage incorporant un empilement monocouche fonctionnelle.

Dans ces figures, les proportions entre les épaisseurs des différentes couches ou des différents éléments ne sont pas rigoureusement respectées afin de faciliter leur lecture.

La figure 1 illustre une structure d'un empilement 14 monocouche fonctionnelle selon l'invention déposé sur une face 11 d'un substrat 10 verrier, transparent, dans laquelle la couche fonctionnelle 140 unique, en particulier à base d'argent ou d'alliage métallique contenant de l'argent, est disposée entre deux revêtements antireflet, le revêtement antireflet sous-jacent 120 situé en dessous de la couche fonctionnelle 140 en direction du substrat 10 et le revêtement antireflet sus-jacent 160 disposé au-dessus de la couche fonctionnelle 140 à l'opposé du substrat 10.

Ces deux revêtements antireflet 120, 160, comportent chacun au moins une couche diélectrique 122, 124, 128 ; 162, 164.

Eventuellement, d'une part la couche fonctionnelle 140 peut être déposée directement sur un revêtement de sous-blocage 130 disposé entre le revêtement antireflet sous-jacent 120 et la couche fonctionnelle 140 et d'autre part la couche fonctionnelle 140 peut être déposée directement sous un revêtement de sur-blocage 150 disposé entre la couche fonctionnelle 140 et le revêtement antireflet sus-jacent 160.

Les couches de sous et/ou sur-blocage, bien que déposées sous forme métalliques et présentées comme étant des couches métalliques, sont parfois dans la pratique des couches oxydées car une de leurs fonctions (en particulier pour la couche de sur-blocage) est de s'oxyder au cours du dépôt de l'empilement afin de protéger la couche fonctionnelle.

Le revêtement antireflet 160 situé au-dessus de la couche fonctionnelle métallique se termine par une couche terminale 168, qui est la couche de l'empilement qui est la plus éloignée de la face 11.

Lorsqu'un empilement monocouche fonctionnelle est utilisé dans un vitrage multiple 100 de structure double vitrage, comme illustré en figure 2, ce vitrage comporte deux substrats 10, 30 qui sont maintenus ensemble par une structure de châssis 90 et qui sont séparés l'un de l'autre par une lame de gaz intercalaire 15.

Le vitrage réalise ainsi une séparation entre un espace extérieur ES et un espace intérieur IS.

L'empilement peut être positionné en face 2 (sur la feuille la plus à l'extérieur du bâtiment en considérant le sens incident de la lumière solaire entrant dans le bâtiment et sur sa face tournée vers la lame de gaz).

La figure 2 illustre ce positionnement (le sens incident de la lumière solaire entrant dans le bâtiment étant illustré par la double flèche) en face 2 d'un empilement de couches minces 14 positionné sur une face intérieure 11 du substrat 10 en contact avec la lame de gaz intercalaire 15, l'autre face 9 du substrat 10 étant en contact avec l'espace extérieur ES.

Toutefois, il peut aussi être envisagé que dans cette structure de double vitrage, l'un des substrats présente une structure feuilletée.

Deux exemples ont été réalisés sur la base de la structure d'empilement illustrée en figure 1.

Pour ces deux exemples, le revêtement antireflet 120 sous-jacent à la couche fonctionnelle 140 comporte trois couches diélectriques 122, 124, 128, la couche 122, première couche de l'empilement et au contact de la face 11, est une couche à indice de réfraction moyen ; elle est en nitrure de Si₈N₄:Al et est déposée à partir d'une cible métallique dopée à 8 % en masse d'aluminium. Elle présente un indice de réfraction compris entre 1,9 et 2,1, et qui est ici précisément de 2,0.

La seconde couche diélectrique, 126 est une couche intermédiaire qui sera décrite plus en détail ci-après.

La troisième couche diélectrique du revêtement antireflet 120 est une couche de mouillage 128 disposée juste sous la couche fonctionnelle métallique 140.

Dans les exemples, il n'y a pas de revêtement de sous-blocage 130.

Pour ces exemples, la couche antireflet 128 est appelée « couche de mouillage » car elle permet d'améliorer la cristallisation de la couche fonctionnelle métallique 140 qui est ici en argent, ce qui améliore sa conductivité. Cette couche antireflet 128 est en oxyde de zinc dopé à l'aluminium ZnO:Al (déposé à partir d'une cible métallique constituée de zinc dopé à 2 % en masse d'aluminium).

Dans les exemples, il y a un revêtement de sur-blocage 150.

Le revêtement antireflet sus-jacent 160 comprend une couche diélectrique 162 en oxyde de zinc dopé à l'aluminium ZnO:Al (déposé à partir d'une cible identique à celle utilisée pour la couche de mouillage 128 et dans les mêmes conditions), puis une couche diélectrique 164 à indice moyen, dans le même matériau que la couche diélectrique 122.

Ce revêtement diélectrique 160 peut se terminer par une couche de protection optionnelle 168, en particulier à base d'oxyde, notamment sous stœchiométrique en oxygène.

Pour tous les exemples ci-après, les conditions de dépôt des couches sont :

| Couche | Cible employée | Pression de dépôt | Gaz |
|---|---|---|---|
| Si₈N₄:Al | Si:Al à 92:8 % wt | 1,5.10⁻³ mbar | Ar /(Ar + N₂) à 45 % |
| TiOₓ | TiOₓ | 2.10⁻³ mbar | Ar /(Ar + O₂) à 90 % |
| TiO₂ | Ti | 2.10⁻³ mbar | Ar /(Ar + O₂) à 35 % |
| Ti | Ti | 7.10⁻³ mbar | Ar à 100 % |
| ZnO:Al | Zn:Al à 98:2 % wt | 2.10⁻³ mbar | Ar /(Ar + O₂) à 52 % |
| SnₓZn_{y}O_{z} | Sn:Zn:Sb à 30:68:2 % wt | 3.10⁻³ mbar | Ar /(Ar + O₂) à 64 % |
| Ag | Ag | 2.10⁻³ mbar | Ar à 100 % |

Les couches déposées peuvent ainsi être classées en quatre catégories :
i- couches en matériau antireflet/diélectrique, présentant un rapport n/k sur toute la plage de longueur d'onde du visible supérieur à 5 : Si₃N₄:Al, TiO₂, ZnO:Al
ii- couche intermédiaire en matériau absorbant, présentant un coefficient k moyen, sur toute la plage de longueur d'onde du visible, supérieur à 0,5 et une résistivité électrique à l'état massif qui est supérieure à 10⁻⁶ Ω.cm : TiOₓ et SnₓZn_{y}O_{z}
iii- couches fonctionnelles métalliques en matériau à propriétés de réflexion dans l'infrarouge et/ou dans le rayonnement solaire : Ag.
iv- couches de sous-blocage et de sur-blocage destinées à protéger la couche fonctionnelle contre une modification de sa nature lors du dépôt de l'empilement ; leur influence sur les propriétés optiques et énergétiques est en général ignorée.

Il a été constaté que l'argent présente un rapport 0 < n/k < 5 sur toute la plage de longueur d'onde du visible, mais sa résistivité électrique à l'état massif est inférieure à 10⁻⁶ Ω.cm.

Pour les deux exemples, l'empilement de couches minces est déposé sur un substrat en verre sodo-calcique clair d'une épaisseur de 4 mm de la marque Planilux, distribué par la société SAINT-GOBAIN.

Pour ces deux exemples,
- ε indique l'émissivité normale, calculée à partir de la résistance par carré R de l'empilement qui est mesurée en ohms par carré, selon la formule : ε = 0,0106 R
- A_{L} indique l'absorption lumineuse dans le visible en %, mesurée selon l'illuminant D65 à 2° ;
- A₉₈₀ indique l'absorption mesurée spécifiquement à la longueur d'onde de 980 nm, en %, mesurées selon l'illuminant D65 à 2° ;
- T_{L} indique : la transmission lumineuse dans le visible en %, mesurée selon l'illuminant D65 à 2° ;
- FS indique le facteur solaire, c'est-à-dire le rapport, en pourcent, de l'énergie solaire totale entrant dans le local à travers le vitrage sur l'énergie solaire incidente totale ; ce facteur est calculé en considérant que le substrat porteur de l'empilement est intégré dans un double vitrage qui présente la structure : 4-16-4 (Ar - 90%), c'est-à-dire que deux substrats en verre, chacun d'une épaisseur de 4 mm sont séparés par une lame de gaz constituée à 90 % d'argon et 10% d'air présentant une épaisseur de 16 mm.

Les deux exemples ont été réalisés selon la structure d'empilement illustré en figure 1, mais sans revêtement de sous-blocage 130.

Le tableau 1 ci-après illustre les épaisseurs géométriques ou physiques (et non pas les épaisseurs optiques) en nanomètres de chacune des couches des deux exemples :

**Tableau 1**

| Couche | Matériau | Ex. 1 | Ex. 2 |
|---|---|---|---|
| 168 | TiO₂ | 2 | 2 |
| 164 | Si₈N₄:Al | 38 | 38 |
| 162 | ZnO:Al | 5 | 5 |
| 150 | Ti | 0,2 | 0,2 |
| 140 | Ag | 8,5 | 8,5 |
| 128 | ZnO:Al | 5 | 5 |
| 126 | | TiOₓ 5 | SnZnOₓ 6 |
| 122 | Si₈N₄:Al | 18 | 18 |

Le tableau 2 ci-après résume les principales caractéristiques optiques et énergétique de ces deux exemples, respectivement lorsque l'on considère uniquement le substrat 10 seul pour l'émissivité, les deux absorptions et la transmission lumineuse et lorsqu'il est monté en double vitrage, en face 2, F2, comme en figure 2 pour le facteur solaire FS, respectivement avant traitement (BT) et après traitement (AT).

**Tableau 2**

| | | Aₗ (%) | A₉₈₀ (%) | ε (%) | T_{L} (%) | FS (%) |
|---|---|---|---|---|---|---|
| Ex. 1 | BT | 6,3 | 13,3 | 4,9 | 88,3 | 64,6 |
| | AT | 4,6 | 12,4 | 3,9 | 90 | 64,4 |
| Ex. 2 | BT | 9,6 | 19 | 4,8 | 85,4 | 65,7 |
| | AT | 4,7 | 12,9 | 4 | 90 | 64,8 |

Ainsi, les propriétés optiques et énergétiques de l'exemple 2 selon l'invention sont sensiblement identiques à celle de l'exemple de référence 1.

Le traitement de l'empilement consiste pour les deux exemples à passer l'empilement, après le dépôt de toutes les couches, sous un rideau 20 de laser à diodes, les diodes étant positionnées au-dessus de l'empilement en référence à la fig 1 et émettant en direction de l'empilement (émission illustrée par la flèche noire droite). Les diodes émettent à la longueur d'onde de 980 nm, chaque diode émettant sur une longueur de 12 mm et une largeur de 45 µm.

Toutefois, pour l'exemple 1 la vitesse de défilement du subtrat revêtu de l'empilement complet est de 11 m/minute alors que pour l'exemple 2 elle est de 22 m/minute.

Il est particulièrement surprenant qu'une couche intermédiaire située dans ledit revêtement diélectrique 120 disposé en dessous de ladite couche fonctionnelle métallique 140 puisse être « ré-oxydée » par le traitement postérieur de l'empilement complet à l'aide d'une source produisant un rayonnement et notamment un rayonnement infrarouge.

Lorsque cette couche intermédiaire est, comme dans le cas de l'exemple ci-dessus, directement sur une couche diélectrique à base de nitrure présentant une épaisseur physique comprise entre 10 et 50 nm et directement sous une couche de mouillage comprenant de l'oxyde de zinc, alors cette couche intermédiaire peut en outre présenter un effet de lissage, comme celui divulgué dans la demande internationale de brevet N° WO 2007/101964.

Une couche intermédiaire déposée à partir d'une cible en Sn:Zn à 56,5:43,5 % wt a également été testée et a donné des résultats similaires.

Il est important de noter que la couche intermédiaire selon l'invention peut être déposée à partir d'une cible céramique qui comporte l'oxygène nécessaire pour atteindre la stœchiométrie en oxygène visée et dans une atmosphère sans oxygène, ou peut être déposée à partir d'une cible métallique qui ne comporte pas tout l'oxygène nécessaire pour atteindre la stœchiométrie en oxygène visée et dans une atmosphère avec de l'oxygène.

## Revendications

1. Substrat (10) revêtu sur une face (11) d'un empilement de couches minces (14) à propriétés de réflexion dans l'infrarouge et/ou dans le rayonnement solaire comportant une seule couche fonctionnelle métallique (140), en particulier à base d'argent ou d'alliage métallique contenant de l'argent, et deux revêtements antireflet (120, 160), lesdits revêtements comportant chacun au moins une couche diélectrique (122, 164), ladite couche fonctionnelle (140) étant disposée entre les deux revêtements antireflet (120, 160), ***caractérisé en ce que*** au moins un desdits revêtements antireflet (120,160) comporte une couche intermédiaire comprenant de l'oxyde de zinc et d'étain SnₓZn_{y}O_{z} avec un rapport de 0,1 ≤ x/y ≤ 2,4, avec 0,75(2x + y) ≤ z ≤ 0,95(2x + y) et présentant une épaisseur physique comprise entre 2 nm et 25 nm, voire entre 2 nm et 12 nm.

2. Substrat (10) selon la revendication 1, ***caractérisé en ce que*** ladite couche intermédiaire comprend de l'oxyde de zinc et d'étain SnₓZn_{y}O_{z} avec un rapport de 0,55 ≤ x/y ≤ 0,83.

3. Substrat (10) selon la revendication 1 ou 2, ***caractérisé en ce que*** ladite couche intermédiaire est située dans ledit revêtement diélectrique (120) disposé en dessous de ladite couche fonctionnelle métallique (140), directement sur une couche diélectrique à base de nitrure et directement sous une couche de mouillage comprenant de l'oxyde de zinc, ladite couche diélectrique à base de nitrure présentant de préférence une épaisseur physique comprise entre 10 et 50 nm, et étant de préférence à base de nitrure de silicium Si₃N₄.

4. Substrat (10) selon l'une quelconque des revendications 1 à 3, ***caractérisé en ce que*** ladite couche intermédiaire est située dans le revêtement antireflet (160) sus-jacent à la couche fonctionnelle (140), de préférence directement sur un revêtement de sur-blocage (150) situé directement sur ladite couche fonctionnelle (140).

5. Vitrage multiple (100) comportant au moins deux substrats (10, 30) qui sont maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats, un substrat (10) étant selon l'une quelconque des revendications 1 à 4.

6. Procédé d'obtention d'un substrat (10) revêtu sur une face (11) d'un empilement de couches minces (14) à propriétés de réflexion dans l'infrarouge et/ou dans le rayonnement solaire comportant une seule couche fonctionnelle métallique (140), en particulier à base d'argent ou d'alliage métallique contenant de l'argent, et deux revêtements antireflet (120, 160), comprenant les étapes suivantes, dans l'ordre :
- le dépôt sur une face (11) dudit substrat (10) d'un empilement de couches minces (14) à propriétés de réflexion dans l'infrarouge et/ou dans le rayonnement solaire comportant une seule couche fonctionnelle métallique (140), en particulier à base d'argent ou d'alliage métallique contenant de l'argent, et deux revêtements antireflet (120, 160), selon l'une quelconque des revendications 1 à 4,
- le traitement dudit empilement de couches minces (14) à l'aide d'une source produisant un rayonnement et notamment un rayonnement infrarouge dans une atmosphère comprenant de préférence de l'oxygène.

## Patentansprüche

1. Substrat (10), das auf einer Seite (11) mit einem Stapel dünner Schichten (14) mit Reflexionseigenschaften im Infrarot- und/oder im Sonnenstrahlungsbereich beschichtet ist, der eine einzige metallische Funktionsschicht (140), insbesondere auf Basis von Silber oder einer silberhaltigen Metalllegierung, und zwei Antireflexbeschichtungen (120, 160) umfasst, wobei die Beschichtungen jeweils mindestens eine dielektrische Schicht (122, 164) umfassen, wobei die Funktionsschicht (140) zwischen den beiden Antireflexbeschichtungen (120, 160) angeordnet ist, ***dadurch gekennzeichnet, dass*** mindestens eine der Antireflexbeschichtungen (120, 160) eine Zwischenschicht beinhaltet, die Zink- und Zinnoxid SnₓZn_{y}O_{z} mit einem Verhältnis von 0,1 ≤ x/y ≤ 2,4, mit 0,75(2x + y) ≤ z ≤ 0,95(2x + y) umfasst und eine physische Dicke zwischen 2 nm und 25 nm oder sogar zwischen 2 nm und 12 nm aufweist.

2. Substrat (10) nach Anspruch 1, ***dadurch gekennzeichnet, dass*** die genannte Zwischenschicht Zink- und Zinnoxid SnₓZn_{y}O_{z} mit einem Verhältnis von 0,55 ≤ x/y ≤ 0,83 umfasst.

3. Substrat (10) nach Anspruch 1 oder 2, ***dadurch gekennzeichnet, dass*** die Zwischenschicht in der genannten dielektrischen Beschichtung (120) gelegen ist, die unterhalb der metallischen Funktionsschicht (140) angeordnet ist, direkt auf einer dielektrischen Schicht auf Nitridbasis und direkt unter einer Benetzungsschicht, die Zinkoxid umfasst, wobei die dielektrische Schicht auf Basis von Nitrid bevorzugt eine physische Dicke zwischen 10 und 50 nm aufweist und bevorzugt auf Siliciumnitrid Si₃N₄ basiert.

4. Substrat (10) nach einem der Ansprüche 1 bis 3, ***dadurch gekennzeichnet, dass*** die Zwischenschicht in der Antireflexbeschichtung (160) gelegen ist, die über der Funktionsschicht (140) liegt, bevorzugt direkt auf einer Oberblocker-Beschichtung (150), die direkt auf der genannten Funktionsschicht (140) gelegen ist.

5. Mehrfachverglasung (100) mit mindestens zwei Substraten (10, 30), die durch eine Rahmenstruktur (90) zusammengehalten werden, wobei die Verglasung eine Trennung zwischen einem Außenraum (ES) und einem Innenraum (IS) bewirkt, wobei zwischen den zwei Substraten mindestens eine Gasfüllung (15) angeordnet ist, wobei ein Substrat (10) die Merkmale eines der Ansprüche 1 bis 4 aufweist.

6. Verfahren zum Erhalten eines Substrats (10), das auf einer Seite (11) mit einem Stapel dünner Schichten (14) mit Reflexionseigenschaften im Infrarot- und/oder im Sonnenstrahlungsbereich beschichtet ist, der eine einzige metallische Funktionsschicht (140), insbesondere auf Basis von Silber oder einer silberhaltigen Metalllegierung, und zwei Antireflexbeschichtungen (120, 160) umfasst, umfassend in der Reihenfolge die folgenden Schritte:
- Abscheiden eines Stapels dünner Schichten (14) mit Reflexionseigenschaften im Infrarot- und/oder im Sonnenstrahlungsbereich, der eine einzige metallische Funktionsschicht (140), insbesondere auf Basis von Silber oder einer silberhaltigen Metalllegierung, und zwei Antireflexbeschichtungen (120, 160) umfasst, auf einer Seite (11) des Substrats (10) nach einem der Ansprüche 1 bis 4,
- Behandeln des Stapels dünner Schichten (14) mithilfe einer Quelle, die eine Strahlung und insbesondere eine Infrarotstrahlung erzeugt, in einer Atmosphäre, die bevorzugt Sauerstoff umfasst.

## Claims

1. A substrate (10) coated on one face (11) with a thin-films stack (14) having reflection properties in the infrared and/or in solar radiation comprising a single metallic functional layer (140), in particular based on silver or on a metal alloy containing silver, and two antireflection coatings (120, 160), said coatings each comprising at least one dielectric layer (122, 164), said functional layer (140) being positioned between the two antireflection coatings (120, 160), ***characterized in that*** at least one of said antireflection coatings (120, 160) comprises an intermediate layer comprising zinc tin oxide SnₓZn_{y}O_{z} with a ratio of 0.1 ≤ x/y ≤ 2.4, with 0.75(2x + y) ≤ z ≤ 0.95(2x + y) and having a physical thickness of between 2 nm and 25 nm, or even between 2 nm and 12 nm.

2. The substrate (10) as claimed in claim 1, ***characterized in that*** said intermediate layer comprises zinc tin oxide SnₓZn_{y}O_{z} with a ratio of 0.55 ≤ x/y ≤ 0.83.

3. The substrate (10) as claimed in claim 1 or 2, ***characterized in that*** said intermediate layer is located in said dielectric coating (120) positioned beneath said metallic functional layer (140), directly on a nitride-based dielectric layer and directly under a wetting layer comprising zinc oxide, said nitride-based dielectric layer preferably having a physical thickness of between 10 and 50 nm, and preferably being based on silicon nitride Si₃N₄.

4. The substrate (10) as claimed in any one of claims 1 to 3, ***characterized in that*** said intermediate layer is located in the antireflection coating (160) superjacent to the functional layer (140), preferably directly on an overblocker coating (150) located directly on said functional layer (140).

5. A multiple glazing (100) comprising at least two substrates (10, 30) which are held together by a frame structure (90), said glazing providing a separation between an external space (ES) and an internal space (IS), wherein at least one intermediate gas-filled space (15) is positioned between the two substrates, one substrate (10) being as claimed in any one of claims 1 to 4.

6. A process for obtaining a substrate (10) coated on one face (11) with a thin-films stack (14) having reflection properties in the infrared and/or in solar radiation comprising a single metallic functional layer (140), in particular based on silver or on a metal alloy containing silver, and two antireflection coatings (120, 160), comprising the following steps, in the order:
- the deposition on one face (11) of said substrate (10) of a thin-films stack (14) having reflection properties in the infrared and/or in solar radiation comprising a single metallic functional layer (140), in particular based on silver or on a metal alloy containing silver, and two antireflection coatings (120, 160), as claimed in any one of claims 1 to 4,
- the treatment of said thin-films stack (14) using a source that produces radiation and in particular infrared radiation in an atmosphere that preferably comprises oxygen.
